# EUROPÄISCHE PATENTSCHRIFT

(11) **EP 1 753 285 B1**
(45) Veröffentlichungstag und Bekanntmachung des Hinweises auf die Patenterteilung: **20.01.2010**
(21) Anmeldenummer: 05741837.8
(22) Anmeldetag: 12.05.2005
(51) Int. Cl.: A01G 9/22, A01G 9/24

(54) **WAND- BZW. DECKENKONSTRUKTION AUS SCHLÄUCHEN**
WALL OR ROOF CONSTRUCTION MADE FROM TUBES
CONSTRUCTION DE PAROIS ET DE PLAFONDS A PARTIR D'ELEMENTS TUBULAIRES SOUPLES

(30) Priorität: 13.05.2004 AT 8252004
(43) Veröffentlichungstag der Anmeldung: 21.02.2007
(73) Patentinhaber: Leitner, Ernst, A-5671 Bruck/Glstr (AT); Koch Membranen GmbH Kunststofftechnologie, 83253 Rimsting (DE); Prebeck, Franz Xaver, 94327 Bogen (DE)
(72) Erfinder: Leitner, Ernst, 5671 Bruck (AT)
(74) Vertreter: Hofinger, Stephan
(86) Internationale Anmeldenummer: PCT/AT2005/000160
(87) Internationale Veröffentlichungsnummer: WO 2005/110063

(56) Entgegenhaltungen:
- US-A- 4 290 242
- US-A- 4 301 626
- US-A- 4 352 259
- US-A- 6 000 170
- US-B1- 6 442 903

## Beschreibung

Die Erfindung bezieht sich auf eine Wand- bzw. Deckenkonstruktion aus nebeneinander angeordneten Schläuchen, die an einer Stelle ihres Umfangs ortsfest gelagerte Halterungen aufweisen, wobei die Schläuche in aufgeblasenem Zustand runden Querschnitt aufweisen und eine geschlossene Begrenzungsfläche bilden und in entleertem Zustand einen flachen Querschnitt aufweisen, sodass zwischen den Schläuchen Zwischenräume insbesondere für den Lichtdurchtritt entstehen.

Aus US 4,301,626 und US 4,290, 242 sind Zwischendecken für Gewächshäuser bekannt, welche aus nebeneinander angeordneten Schläuchen bestehen, die im aufgeblasenen Zustand die Pflanzen vor Sonnenbestrahlung schützen. Die Schläuche bestehen aus biegeschlaffem Material, sodass sie bei Evakuierung fahnenartig herabhängen und einen lichtdurchlässigen Rost bilden.

Aus US 6,000,170 und US 6,442,903 sind Wand- bzw. Deckenkonstruktionen gemäß dem Oberbegriff des Anspruch 1 bekannt. Diese Dokumente beschäftigen sich aber nicht mit der Problematik, eine witterungsdichte Wand- bzw. Deckenkonstruktion zu bilden.

Der Erfindung liegt die Überlegung zugrunde, dass derartige Konstruktionen einen wesentlich vergrößerten Anwendungsbereich hätten, wenn sie so ausgebildet würden, dass sie als Außenhülle von Gebäuden verwendbar sind. Je nach Verwendungszweck würde dann durch das Öffnen und Schließen der Konstruktion der Einfall von Sonne, Regen und Schnee ins Innere ermöglicht oder verhindert werden.

Zur Lösung der gestellten Aufgabe ist vorgesehen, dass jeder Schlauch an einer den ortsfest gelagerten Halterungen gegenüberliegenden Stelle seines Umfangs eine weitere Halterung aufweist, auf welche eine von der ortsfesten Halterung weg gerichtete Kraft aufbringbar ist. Durch diese Maßnahme wird der Querschnitt und vor allem die Orientierung der Schläuche während des Entleerungs- und Füllvorgangs durch die vorzugsweise mittels eines Seils aufgebrachte radiale Kraft kontrolliert. Die Schläuche weisen nicht nur im geschlossenen, sondern auch im geöffneten Zustand eine definierte Konfiguration und Lage auf.

Durch die Trennbarkeit der Schläuche entsteht aber das Problem, sie bei geschlossener Dachhaut hinreichend fest aneinanderzudrücken, um Witterungseinflüsse abzuhalten. Diese Aufgabe wird erfindungsgemäß durch in das primäre statische Tragsystem integrierte biege- und verwindungssteife Begrenzungsprofile gelöst, welche die am Rande liegenden Schläuche am Ausweichen hindern.

Ein besonders interessantes Anwendungsgebiet ist die Nutzung der Erfindung für Wintersportstätten im Hochgebirge. Bei Schneefall wird das Dach geöffnet (Luft wird aus den Schläuchen abgesaugt). Der Schnee kann auf die ansonsten überdachte Schipiste fallen. Anfallende Schneelast auf der Dach/Wandhaut bzw. auf dem primären statischen Tragesystem wird vermieden. Dies ermöglicht eine stark reduzierte Tragekonstruktion mit erhöhter architektonischer Ästhetik in sensibler landschaftlicher Umgebung und eine gravierende Reduzierung der Planungs-, Fertigungs-, Material-, Transport- und Montagekosten. Der Transportaufwand und die Montagearbeit in unwegsamem alpinem Gelände werden entscheidend vereinfacht. Die Montage erfolgt mit hoher Maßtoleranz und Anpassungsfähigkeit. Wartungsarbeiten sind mit geringen technischen Mitteln und einfacher Schulung durchführbar. Die natürlich gefallene Schneemenge steht im Inneren uneingeschränkt zur Verfügung. Dadurch muss im Winter im Prinzip kein Kunstschnee produziert werden. Damit werden der Energieaufwand und der Wasserbedarf für Kunstschnee-Erzeugung stark reduziert. Dies ergibt ein geringeres Volumen an künstlicher Wasserspeicherung. Die Baukosten und die Belastung der Umwelt werden stark vermindert.

Bei kaltem Schönwetter im Winter kann das Dach geöffnet werden. Die winterliche Außenatmosphäre dringt in das Innere der Schipistenüberdachung. Während der Sommerzeit bleibt das Dach geschlossen und bietet so zugleich Wetterschutz und Temperaturhülle.

Das Luftkissenprinzip der Schläuche wirkt wärmedämmend und stabilisiert die gewünschte Raumtemperatur. Durch reflektierende Beschichtung zur Rauminnenseite und weißer Beschichtung zur Außenseite wird die temperaturisolierende Wirkung der Dachhaut zusätzlich verstärkt, Eine weitere Steigerung der Temperaturregelung wird durch Kühlung der in die Schläuche eingeblasenen Luft erreicht.

Ein weiteres interessanten Anwendungsgebiet liegt im Bereich von leicht öffen- und schließbaren Überdachungen für Fußballstadien - insbesondere über dem Spiel- bzw. Rasenbereich. Bei Spiel / Regen / Schnee wird das Dach geschlossen. Die während der Spielzeit fallende Schneemenge kann durch Erwärmung der eingeblasenen Luft permanent abgetaut werden. Ansonsten bleibt das Dach geöffnet, wodurch die notwendige Rasenbewässerung und auch das natürliche Raumklima bei Schönwetter gesichert ist.

Die Leichtbauweise der Konstruktion begünstigt ihre Adaptierung auch auf bereits vorhandenen Anlagen bzw. die wirtschaftlich und architektonisch günstige Bewältigung allfälliger Bauaufgaben dieser Art.

Eine Adaptierung der Anlage für andere Sportarten (Schwimmen, Tennis), bei denen Wind und Regen abgehalten werden sollen, ist naheliegend. Auch die Verwendung der Erfindung für Gartenkulturen bietet sich an, um Regen und Sonne in kontrollierter Weise zuführen zu können. Im allgemeinen Hochbau ergibt sich durch die geschützte Maßnahme ein stufenlos einstellbarer Sonnenschutz.

Konstruktive Einzelheiten der Erfindung werden anschließend anhand der Zeichnung erläutert. In dieser ist
- Fig. 1: ein Querschnitt durch eine erfindungsgemäß gebaute Sporthalle,
- Fig. 2: ein Detail aus Fig. 1,
- Fig. 3: ein weiteres Detail aus Fig. 1

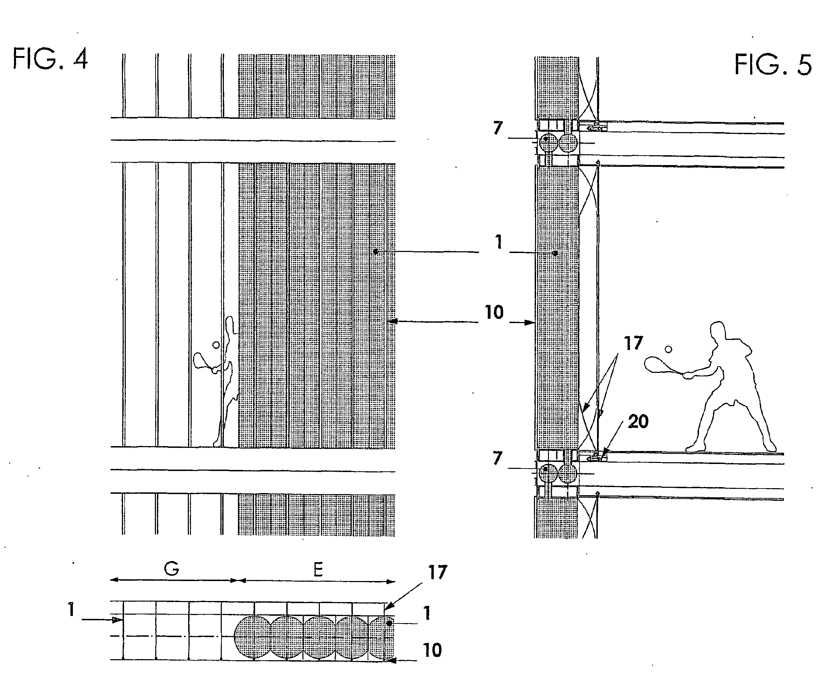

- Fig. 4: zeigt ein zweites Ausführungsbeispiel in Seitenansicht und Horizontalschnitt,
- Fig. 5: im Vertikalschnitt;
- Fig. 6: ist ein vergrößerter Ausschnitt aus Fig. 5.

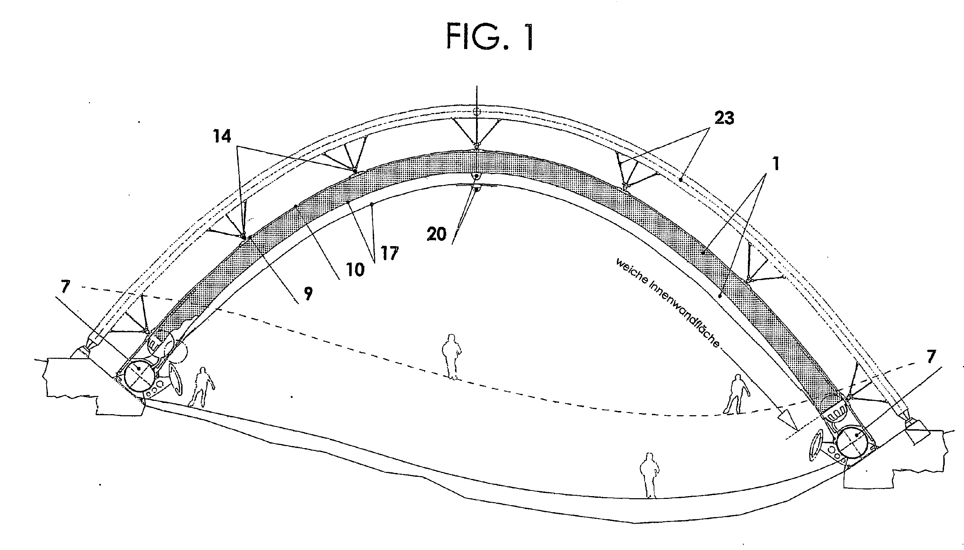

Beim Ausführungsbeispiel nach Fig. 1 bis 3 ist an einem primären Tragsystem 23 eine Vielzahl von Schläuchen 1 nebeneinander angeordnet, sodass diese im gepunktet dargestellten aufgeblasenen Zustand ein geschlossene Dachfläche für eine Halle bilden. Das Aufblasen und Entleeren der Schläuche 1 erfolgt über Rohre 7, in welchen Überdruck bzw. Unterdruck herrscht und in welche die Schläuche 1 einzeln angeschlossen werden können. Die gesamte Luftversorgung kann auf Umluftbetrieb umgeschaltet werden. Damit kann über ein integriertes Kühl- und Heizsystem bei Bedarf die pneumatische Konstruktion aktiv für die Temperatursteuerung des überdachten Raumes eingesetzt werden. Um insbesondere bei transparenten Schläuchen ein Verschmutzen zu vermeiden, kann die umlaufende Luft in einer Filteranlage gereinigt werden.

Was die Form der erfindungsgemäßen Dach- bzw. Wandkonstruktion angeht, so ist von vorneherein jede Konstruktion durchführbar, welche bei fest miteinander verbundenen Schläuchen bekannt ist. Da die erfindungsgemäß vorgesehenen Schläuche ohnedies einzeln montiert und befüllt werden, ist es übrigens kein Problem, verschieden lange Schläuche aneinanderzureihen und sich dadurch der Geländeform anzupassen. Natürlich entsteht durch die Trennbarkeit der Schläuche das Problem, sie bei geschlossener Dachhaut hinreichend fest aneinanderzudrücken, um Witterungseinflüsse vom Inneren der Halle abzuhalten. In diesem Sinne sind in das primäre statische Tragsystem 23 biege- und verwindungssteife Begrenzungsprofile zu integrieren, welche die am Rande liegenden Schläuche am Ausweichen hindern.

Durch das erfindungsgemäße Öffnen und Schließen der Dachhaut besteht an sich die Möglichkeit, dass zwischen benachbarten Schläuchen Wasser eingeschlossen wird. Um dieses Wasser abzuleiten, können im Berührungsbereich benachbarter Schläuche Kanneluren vorgesehen werden, welche eine Drainierung von Niederschlagswasser bewirken.

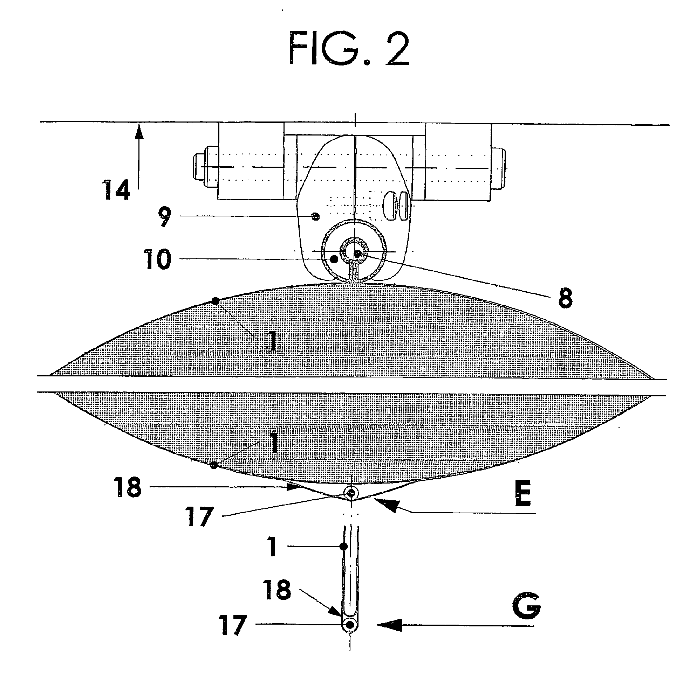

Die Verbindung zwischen den Schläuchen 1 und den Trägerprofilen 14 des primären Tragsystems 23 geht insbesondere aus Fig. 2 hervor, in welcher wiederum die Schläuche im gefüllten (gepunktet) sowie im entleerten Zustand dargestellt sind.

Zur Verbindung mit dem Trägerprofil 14 dient ein pendelnd aufgehängtes Verbindungselement 9, welche eine Klemme für den Schlauchrücken bildet. Entlang des Schlauchrückens verläuft ein Keder in Form des ballig ausgebildeten Flansches. Dieser bildet die ortsfeste Halterung des Schlauches 1 an dem Tragsystem 23. Vermittelt wird diese Halterung durch Profile 10, welche die Flansche am Schlauchrücken umgeben. Diese Profile 10 sind aus hochelastischem Material gefertigt und in den Verbindungselementen stufenlos verstellbar.

Wesentlich für die Erfindung ist die wiederum aus Fig. 2 gut ersichtliche Möglichkeit, durch ein Seil 17 die Lage und Konfiguration des Schlauches 1 bei aufgeblasenem und leerem Schlauch 1 präzise festzusetzen. Bei aufgeblasenem Schlauch 1 (gepunktet) liegt das Seil in entspanntem Zustand (E) in der als Hülse ausgebildeten beweglichen Halterung 18. Wird das Seil in den gespannten Zustand (G) übergeführt, so nimmt der Schlauch 1 Leistenform an und weist auf die benachbarten Schläuche einen weiten Abstand auf.

Als Material für die Schläuche kommen ETFE Folien (Ethylentetrafluorethylen) bzw. PVC - PES - Folien bevorzugt zur Anwendung. An sich ist jeder Material geeignet, welches mehrfach den für die Erfindung typischen Wechsel zwischen der geleerten und der aufgeblasenen Form des Schlauches mitmachen kann.

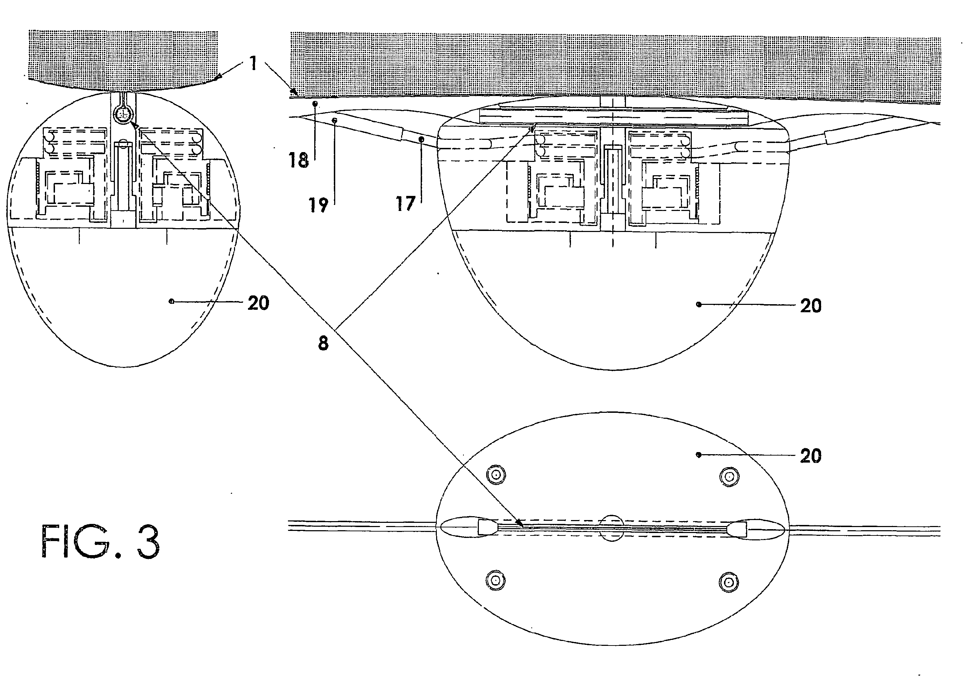

Die Aggregate zum Spannen und Entspannen der Seile 17 können an verschiedenen Stellen angeordnet und unterschiedlich ausgebildet sein. Fig. 3 zeigt eine in Fig. 1 angedeutete Anordnung des Spannaggregates 20 im Deckenbereich der Halle und zwar in Schnitten quer zur Erstreckung der Schläuche, parallel zur Richtung der Schläuche und in Draufsicht auf den leeren Schlauch 1. Die Befestigung des Spannaggregates 20 erfolgt über Flansche 28 an der Unterseite der Schläuche 1. Das Seil 17 wird von beiden Seiten über Seilhüllen 19 dem Spannaggregat zugeführt. Die beiden Enden des Seiles 17 werden gegenläufig aufgewickelt um eine Verdrehung des entleerten Schlauches zu verhindern.

Beim zweiten Ausführungsbeispiel bilden die Schläuche 1 im gefüllten Zustand eine Fassade oder Wand. Abweichend vom ersten Ausführungsbeispiel sind hier die Profile 10, welche die ortsfeste Halterung der Schläuche 1 bilden, biegefest und an ihren Enden fixiert. Wiederum ist jedoch, wie es dem Wesen der Erfindung entspricht, der Übergang vom kreisförmigen zum flachen Querschnitt der Schläuche 1 mit einem Übergang der Seile 17 vom entspannten (E) in den gespannten (G) Zustand verknüpft.

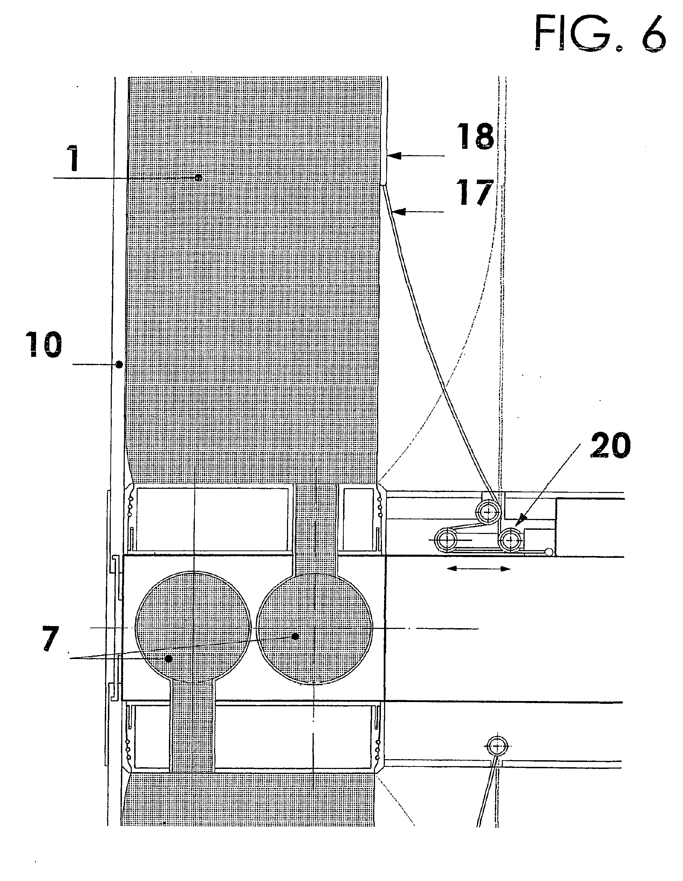

Die Seile 17 sind wie beim ersten Ausführungsbeispiel in Hülsen an der Innenseite der Schläuche 1 geführt, welche die bewegliche Halterung der Seile 17 bilden. Fährt nun das Spannaggregat 20 in Fig. 6 nach linkst verkürzt sich das Seil 17 und zieht den entleerten Schlauch 1 in die rechte Position. Damit wird die zunächst geschlossene Wand in eine Serie von Lamellen aufgelöst.

## Patentansprüche

1. Wand- bzw. Deckenkonstruktion aus nebeneinander angeordneten Schläuchen (1), die an einer Stelle ihres Umfangs ortsfest gelagerte Halterungen aufweisen, wobei die Schläuche (1) in aufgeblasenem Zustand runden Querschnitt aufweisen und eine geschlossene Begrenzungsfläche bilden und in entleertem Zustand einen flachen Querschnitt aufweisen, sodass zwischen den Schläuchen (1) Zwischenräume insbesondere für den Lichtdurchtritt entstehen, wobei jeder Schlauch (1) an einer den ortsfest gelagerten Halterungen (8, 10) gegenüberliegenden Stelle seines Umfangs eine weitere Halterung (18) aufweist, auf welche eine von der ortsfesten Halterung (8, 10) weg gerichtete Kraft aufbringbar ist, **gekennzeichnet durch** ein Tragsystem (23), das biege und verwindungssteife Begrenzungsprofile aufweist, wobei die biege- und verwindungssteifen Begrenzungsprofile die Schläuche (1) im aufgeblasenen Zustand hinreichend fest aneinanderdrücken, sodass Witterungseinflüsse abgehalten werden.

2. Wand- bzw. Deckenkonstruktion nach Anspruch 1, **dadurch gekennzeichnet, dass** zur Aufbringung der Kraft auf den Schlauch (1) ein mit einem Spannaggregat (20) verbundenes Seil (17) vorgesehen ist.

3. Wand- bzw. Deckenkonstruktion nach Anspruch 2, **dadurch gekennzeichnet, dass** das Seil (17) in einer längs des Schlauches (1) verlaufenden Hülse (18) geführt wird.

4. Wand- bzw. Deckenkonstruktion nach einem der Ansprüche 1 bis 3, **dadurch gekennzeichnet, dass** die ortsfeste Halterung des Schlauches (1) durch einen längs des Schlauches verlaufenden Flansch (8) gebildet ist, welcher von einem Profil (10) umgeben ist.

5. Wand- bzw. Deckenkonstruktion nach Anspruch 4, **dadurch gekennzeichnet, dass** die ortsfeste Lagerung der Halterung (8, 10) mittels Verbindungselementen (9) erfolgt, welche an einem primären statischen Tragsystem (23) pendelnd aufgehängt sind.

6. Wand- bzw. Deckenkonstruktion nach Anspruch 4, **dadurch gekennzeichnet, dass** die Profile (10) biegefest und an ihren Enden fixiert und **dadurch** ortsfest gelagert sind.

## Claims

1. Wall or roof construction made up of adjacently arranged tubes (1) which have at a position on their circumference stationarily mounted holders, the tubes (1) having in the inflated state a round cross section and forming a closed delimitation surface and having in the deflated state a flat cross section so that gaps, especially for the passage of light, are formed between the tubes (1), each tube (1) having, at a position on its circumference opposite the stationarily mounted holders (8, 10), a further holder (18) to which a force directed away from the stationary holder (8, 10) can be applied, **characterised by** a support system (23) having flexurally and torsionally rigid delimitation profiles, the flexurally and torsionally rigid delimitation profiles pressing in the inflated state the tubes (1) sufficiently securely against one another, so that atmospheric influences are kept at bay.

2. Wall or roof construction according to claim 1, **characterised in that** a rope (17), which is connected to a tensioning unit (20), is provided for applying the force to the tube (1).

3. Wall or roof construction according to claim 2, **characterised in that** the rope (17) is guided in a sleeve (18) extending along the tube (1).

4. Wall or roof construction according to one of claims 1 to 3, **characterised in that** the stationary holder of the tube (1) is formed by a flange (8) which extends along the tube and is surrounded by a profile (10).

5. Wall or roof construction according to claim 4, **characterised in that** the holder (8, 10) is stationarily mounted by means of connecting elements (9) which are pendulously suspended from a primary static support system (23).

6. Wall or roof construction according to claim 4, **characterised in that** the profiles (10) are mounted in a flexurally rigid manner and are fixed at their ends so as to be stationarily mounted.

## Revendications

1. Construction de parois et plafonds à partir de tuyaux flexibles (1) disposés les uns à côté des autres et munis de fixations montées de manière fixe à un emplacement de leur pourtour, dans lequel lesdits tuyaux flexibles (1), à l'état gonflé, ont une section ronde et forment une surface de délimitation fermée et, à l'état purgé, ont une section plate, de telle sorte que des interstices se forment entre les tuyaux flexibles (1), notamment pour le passage de la lumière, chaque tuyau flexible (1) comportant, à un emplacement de son pourtour, en face des fixations (8, 10) fixes, une fixation (18) supplémentaire, sur laquelle peut être appliquée une force orientée en s'écartant de la fixation (8, 10) fixe, **caractérisée par** un système de support (23), qui comporte des profilés de délimitation résistants à la flexion et à la torsion, sachant que lesdits profilés de délimitation résistants à la flexion et à la torsion poussent les tuyaux flexibles (1), à l'état gonflé, suffisamment les uns contre les autres pour former une protection contre les intempéries.

2. Construction de parois et plafonds selon la revendication 1, **caractérisée en ce que** pour l'application de la force sur le tuyau flexible (1), il est prévu un câble (17) relié à un organe de serrage (20).

3. Construction de parois et plafonds selon la revendication 2, **caractérisée en ce que** le câble (17) est guidé dans une gaine (18) s'étendant le long du tuyau flexible (1).

4. Construction de parois et plafonds selon l'une quelconque des revendications 1 à 3, **caractérisée en ce que** la fixation fixe du tuyau flexible (1) est formée par une bride (8), qui s'étend le long du tuyau flexible et qui est entourée par un profilé (10).

5. Construction de parois et plafonds selon la revendication 4, **caractérisée en ce que** le montage fixe de la fixation (8, 10) est assuré par des éléments d'assemblage (9), qui sont suspendus de manière oscillante à un système de support (23) primaire statique.

6. Construction de parois et plafonds selon la revendication 4, **caractérisée en ce que** les profilés (10) sont résistants à la flexion et sont fixés au niveau de leurs extrémités et, de ce fait, sont montés de manière fixe.
